# EUROPEAN PATENT SPECIFICATION

(11) **EP 3 946 908 B1**
(45) Date of publication and mention of the grant of the patent: **29.11.2023**
(21) Application number: 20725954.0
(22) Date of filing: 25.02.2020
(51) Int. Cl.: B29C 70/52, B29C 70/86, E06B 3/22, B29L 31/00, B29L 12/00, B29K 307/04, B29K 63/00, B29K 667/00

(54) **PROFILE MADE THROUGH A PULTRUSION PROCESS USING CARBON FIBERS**
DURCH PULTRUSIONSVERFAHREN HERGESTELLTES PROFIL MIT KOHLENSTOFFFASERN
PROFILÉ RÉALISÉ PAR UN PROCÉDÉ DE PULTRUSION UTILISANT DES FIBRES DE CARBONE

(30) Priority: 25.03.2019 IT 201900004233
(43) Date of publication of application: 09.02.2022
(73) Proprietor: SICO-SERVICE S.r.l., 12084 Mondovi' (CN) (IT)
(72) Inventor: DENEGRI, Carlo, 12084 Mondovi' (CN) (IT)
(74) Representative: Garavelli, Paolo
(86) International application number: PCT/IT2020/000021
(87) International publication number: WO 2020/194354

(56) References cited:
- EP-A2- 0 269 197
- DE-A1-102011 015 455

## Description

The present invention refers to a process for making a profile through a pultrusion process, using carbon fibers.

Profiles made through a pultrusion process are known, by using a plastic reinforced material, for example through glass fibers or carbon fibers.

For the connection of such known profiles, it is necessary to use assembling systems comprising joint or glued elements, for example threaded bushes glued to the profile, not being it possible to perform drilling and/or threading of the profile simply and with reduced times, to perform a quick and cheap connection of the profiles.

DE-A1-10 2011 015455 discloses a generic profile according to the prior art.

Object of the present invention is providing a pultrusion process for producing a profile, which allows performing a quick and cheap connection of the profiles.

The above and other objects and advantages of the invention, as will result from the following description, are obtained with a pultrusion process as claimed in the independent claim. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as contained in the enclosed claims.

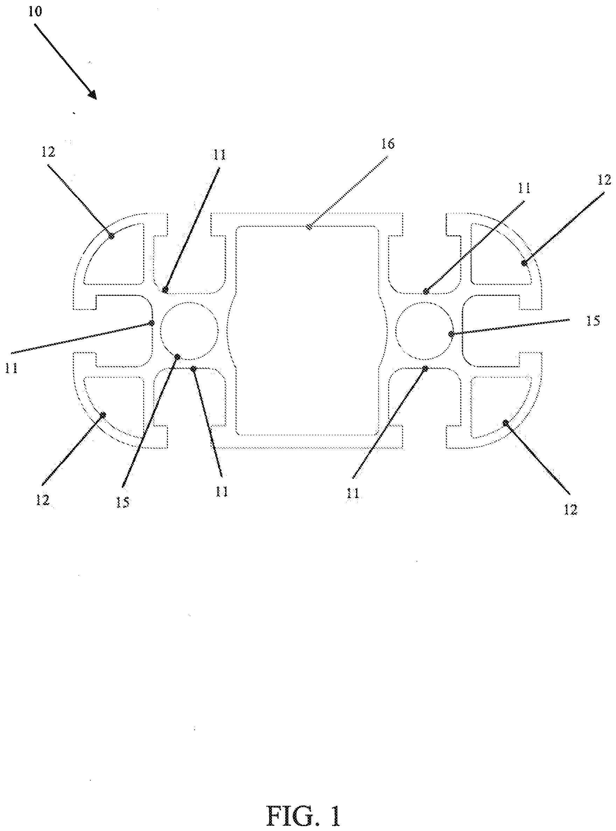

The present invention will be better described by a preferred embodiment thereof, provided as a non-limiting example, with reference to the enclosed drawings, in which Figure 1 shows a sectional view of a profile produced with the process according to the present invention.

With reference to the Figure, a preferred embodiment of the profile made through a pultrusion process of the present invention is shown and described.

The process for making a profile according to the present invention is a pultrusion process, which comprises the following steps:
- a step of preparing the materials, in which reinforcing fibers, for example glass fibers or carbon fibers, and a plastic material, in a preferred way polyester, are prepared, preferably as filaments, for obtaining a stratification of the materials, wherein the plastic material is surrounded by the reinforcing fibers;
- a step of impregnating the reinforcing fibers and the plastic material with a resin which composes the polymeric matrix, preferably an epoxy resin or another resin of a known type for the pultrusion (for example polyester resin, vinylester resin, methacrylate resin and polyurethane resins and possible known additives);
- a step of introducing the impregnated material into a pultrusion die, in order to keep the plastic material surrounded by the reinforcing fibers;
- a step of heating the die for obtaining the polymerization of the resin;
- a step of continuously extracting the profile from the die, performed by keeping the filaments of plastic material longitudinally arranged along the extraction direction, to form inside the extracted profile a longitudinal insert 15 made of plastic material, surrounded by the reinforced material made of carbon fiber;
- a step of cutting the profile to make a profile of the desired length.

With reference to the Figure, a profile 10 is described, obtained with the process of the invention, which comprises at least one longitudinal groove 11, at least one recess 12, 16 longitudinally arranged to the profile 10 and in parallel with such groove 11, at least one longitudinal insert 15 arranged internally to the profile 10, longitudinally with respect thereto, and in parallel to said groove 11 and recess 12, 16.

The longitudinal insert 15 is formed with a material, preferably a plastic material, for example polyester, which is different from the material with which the profile 10 is formed, preferably carbon fiber, and is completely surrounded by a thickness of the material with which the profile 10 is formed; the material with which the longitudinal insert 15 is formed is easy to drill and thread and therefore composes a drilling area of the profile 10, in which drillings and/or threading of the profile 10 can be performed easily and with reduced times, for obtaining a quick and cheap connection of the profiles.

In a preferred way, the longitudinal insert 15 is surrounded by walls which are configured to form at least one groove 11 and/or at least one recess 12, 16; preferably, the longitudinal insert 15 has a circular cross section; in a preferred embodiment of the invention, the profile 10 comprises a plurality of grooves 11 and recess 12, 16.

Preferably, the profile 10 comprises a central recess 16 with a substantially rectangular section and two longitudinal inserts 15, each surrounded by three grooves 11.

Advantageously, the process for making a profile according to the invention allows making a fiber profile, for example carbon fiber, which allows performing a simple and cheap connection of the profiles, due to the presence of the longitudinal insert 15 which composes a drilling area of the profile 10, in which drillings and/or threading can be performed simply and with reduced times.

## Claims

1. Process for producing a profile (10) comprising:
- at least one longitudinal groove (11);
- at least one recess (12, 16) longitudinally arranged to the profile (10) and in parallel with said groove (11);
- at least one longitudinal insert (15) arranged internally to the profile (10), longitudinally with respect thereto, and in parallel with said groove (11) and recess (12, 16), said longitudinal insert (15) being formed with a plastic material different from the material with which the profile (10) is formed and being completely surrounded by a thickness of the material with which the profile (10) is formed, to compose a drilling area of the profile (10), the longitudinal insert (15) being surrounded da walls which are configured to form at least one groove (11) and/or at least one recess (12, 16)
said process comprising the following steps:
- a step of preparing the materials, wherein reinforcing fibers and a plastic material, as filaments, are prepared for obtaining a stratification of the materials in which the plastic material is surrounded by the reinforcing fibers;
- a step of impregnating the reinforcing fibers and the plastic material with a resin which composes the polymeric matrix;
- a step of introducing the impregnated material into a pultrusion die, in order to keep the plastic material surrounded by the reinforcing fibers;
- a step of heating the die for obtaining the polymerization of the resin;
- a step of continuously extracting the profile from the die, to form inside the extracted profile a longitudinal insert (15) made of plastic material, surrounded by the reinforced material with the fibers, the step of continuously extracting the profile from the die being performed by keeping the filaments of plastic material longitudinally arranged along the extraction direction, to form inside the extracted profile the longitudinal insert (15) made of plastic material, surrounded by the reinforced material;
- a step of cutting the profile to make a profile of the desired length.

2. Process according to claim 1, **characterized in that** the profile (10) comprises a plurality of grooves (11) and recesses (12, 16).

3. Process according to claim 1 or 2, **characterized in that** the profile (10) comprises a central recess (16) and two longitudinal inserts (15), each surrounded by three grooves (11).

4. Proces according to any one of the previous claims, **characterized in that** the reinforcing fibers are carbon fibers, the plastic material is polyester and the resin is an epoxy resin.

5. Process according to any one of the previous claims, **characterized in that** the material with which the longitudinal insert (15) is formed is polyester, and the profile (10) is in carbon fiber.

## Patentansprüche

1. Verfahren zur Herstellung eines Profils (10), umfassend:
- mindestens eine Längsnut (11);
- mindestens einen Hohlraum (12, 16), der in Längsrichtung des Profilstabs (10) und parallel zur Nut (11) angeordnet ist;
- mindestens einen Längseinsatz (15), der im Inneren des Profilstabs (10) in Längsrichtung zu diesem und parallel zu der Nut (11) und dem Hohlraum (12, 16) angeordnet ist, wobei der Längseinsatz (15) mit einem geformt ist Kunststoffmaterial, das von dem Material, aus dem das Profil (10) geformt ist, unterschiedlich ist und von einer Dicke des Materials, aus dem das Profil (10) gebildet ist, vollständig umgeben ist, um einen Bohrbereich für das Profil (10), den Längseinsatz, zu bilden (15) von Wänden umgeben ist, die zur Bildung mindestens einer Nut (11) und/oder mindestens einer Aussparung (12, 16) ausgebildet sind.
wobei das Verfahren die folgenden Schritten umfasst:
- einen Schritt zur Vorbereitung der Materialien, bei dem Verstärkungsfasern und ein Kunststoffmaterial in Form von Filamenten vorbereitet werden, um eine Schichtung der Materialien zu erhalten, bei der das Kunststoffmaterial von den Verstärkungsfasern umgeben ist;
- einen Imprägnierungsschritt der Verstärkungsfasern und des Kunststoffmaterials mit einem Harz, das die Polymermatrix bildet;
- einen Schritt des Einbringens des imprägnierten Materials in eine Pultrusionsform, um das Kunststoffmaterial von den Verstärkungsfasern umgeben zu halten;
- einen Schritt des Erhitzens der Form, um die Polymerisation des Harzes zu erreichen;
- einen Schritt der kontinuierlichen Entnahme des Profils aus der Form, um im Inneren des entnommenen Profils einen Längseinsatz (15) aus Kunststoffmaterial zu bilden, der von dem mit Fasern verstärkten Material umgeben ist, wobei der Schritt der kontinuierlichen Entnahme des Profils aus der Form erfolgt wobei die in Längsrichtung in Extraktionsrichtung angeordneten Fäden aus Kunststoffmaterial aufrechterhalten werden, um den Längseinsatz (15) aus Kunststoffmaterial im Inneren des herausgezogenen Profils zu bilden, der von dem verstärkten Material umgeben ist;
- einen Schritt zum Schneiden des Profils, um ein Profil mit der gewünschten Länge herzustellen.

2. Verfahren nach Anspruch 1, **dadurch gekennzeichnet, dass** der Profilstab (10) eine Vielzahl von Nuten (11) und Hohlräumen (12, 16) aufweist.

3. Verfahren nach Anspruch 1 oder 2, **dadurch gekennzeichnet, dass** der Profilstab (10) einen zentralen Hohlraum (16) und zwei Längseinlagen (15) aufweist, die jeweils von drei Nuten (11) umgeben sind.

4. Verfahren nach einem der vorhergehenden Ansprüche, **dadurch gekennzeichnet, dass** die Verstärkungsfasern Kohlenstofffasern sind, der Kunststoff Polyester ist und das Harz ein Epoxidharz ist.

5. Verfahren nach einem der vorhergehenden Ansprüche, **dadurch gekennzeichnet, dass** das Material, aus dem die Längseinlage (15) gebildet wird, Polyester ist und der Profilstab (10) aus Kohlefaser besteht.

## Revendications

1. Procédé de réalisation d'un profilé (10) comprenant:
- au moins une rainure longitudinale (11);
- au moins une cavité (12, 16) disposée longitudinalement au profilé (10) et parallèlement à ladite rainure (11);
- au moins un insert longitudinal (15) agencé à l'intérieur du profilé (10), longitudinalement par rapport à celui-ci, et parallèle auxdites gorge (11) et cavité (12, 16), ledit insert longitudinal (15) étant formé avec un matériau plastique différent du matériau avec lequel le profilé (10) est formé et étant complètement entouré par une épaisseur du matériau avec lequel le profilé (10) est formé, pour former une zone de perçage pour le profilé (10), l'insert longitudinal (15) étant entouré de parois configurées pour former au moins une rainure (11) et/ou au moins un évidement (12, 16);
ladite procède comprenant les étapes suivantes:
- une étape de préparation des matériaux, dans laquelle des fibres de renfort et une matière plastique, sous forme de filaments, sont préparées pour obtenir une stratification des matériaux dans laquelle la matière plastique est entourée par les fibres de renfort;
- une étape d'imprégnation des fibres de renfort et de la matière plastique par une résine constituant la matrice polymérique;
- une étape d'introduction de la matière imprégnée dans un moule de pultrusion, de manière à maintenir la matière plastique entourée des fibres de renfort;
- une étape de chauffage du moule pour obtenir la polymérisation de la résine;
- une étape d'extraction continue du profilé hors du moule, pour former un insert longitudinal (15) en matière plastique à l'intérieur du profilé extrait, entouré par le matériau renforcé par les fibres, la phase d'extraction continue du profilé hors du moule étant réalisée tout en maintenant les filaments de matière plastique disposés longitudinalement dans la direction d'extraction, pour former l'insert longitudinal (15) de matière plastique à l'intérieur du profilé extrait, entouré par le matériau renforcé;
- une étape de découpe du profilé pour réaliser un profilé de la longueur souhaitée.

2. Procédé selon la revendication 1, **caractérisé en ce que** le profilé (10) comprend une pluralité de rainures (11) et de cavités (12, 16).

3. Procédé selon la revendication 1 ou 2, **caractérisé en ce que** le profilé (10) comprend une cavité centrale (16) et deux inserts longitudinaux (15) entourés chacun de trois rainures (11).

4. Procédé selon l'une quelconque des revendications précédentes, **caractérisé en ce que** les fibres de renfort sont des fibres de carbone, la matière plastique est du polyester et la résine est une résine époxy.

5. Procédé selon l'une quelconque des revendications précédentes, **caractérisé en ce que** le matériau avec lequel l'insert longitudinal (15) est formé est du polyester, et le profilé (10) est en fibre de carbone.
